# EUROPEAN PATENT APPLICATION

(11) **EP 4 306 702 A1**
(43) Date of publication of application: **17.01.2024**
(21) Application number: 23185113.0
(22) Date of filing: 12.07.2023
(51) Int. Cl.: D06B 11/00

(54) **MACHINE FOR THE TREATMENT OF PRODUCTS**

(30) Priority: 15.07.2022 IT 202200014884
(71) Applicant: Tonello S.r.l., 36030 Sarcedo (Vicenza) (IT)
(72) Inventor: TONELLO, Flavio, 36030 Sarcedo (Vicenza) (IT)
(74) Representative: Feltrinelli, Secondo Andrea

(57) **Abstract**

The present invention relates to a machine for the treatment of products, in particular textile products, such as clothing, particularly suitable for being used for the application of engravings or decorative elements or motifs.

Furthermore, the present invention also relates to a method for the treatment of products, in particular textile products, such as clothing, by means of the aforementioned machine.

## Description

### TECHNICAL FIELD OF THE INVENTION

The present invention relates to a machine for the treatment of products, in particular textile products, such as clothing, particularly suitable for being used for the application of engravings or decorative elements or motifs.

Furthermore, the present invention also relates to a method for the treatment of products, in particular textile products, such as clothing, by means of the aforementioned machine.

### STATE OF THE PRIOR ART

The textile-clothing technical sector, with the advance of scientific progress and technology, is also proceeding ever faster towards an automation of the industrial technical processes of fabric processing and decoration.

With the updating of consumption and the improvement of the quality of life, people have developed an ever-higher demand related to the type of fabric or, more specifically, to the style of clothing.

The buyer, in fact, places more and more interest in the aesthetic peculiarities and the decorative and treatment features of the fabric or, more specifically, of the cloth to be purchased.

Fabrics, such as denim for example, can be worked so as to simulate a worn look or decorated with rips or particular decorative motifs.

For example, to create a faded and worn look on a fabric, a wet process, such as a stone and/or enzyme process, may be applied, typically after the fabric has been made into a cloth.

In particular, an enzymatic wash in combination with agitation elements, such as stones or rocks or substitutes, is able to remove the color from a blue denim fabric to develop a contrasting pattern of varying color intensities that create a worn look. The faded areas of the denim fabric are where stones or rocks or substitutes come into contact with the fabric during the enzymatic wash process.

As can be understood, the traditional washing processes with stones and/or enzymes have numerous drawbacks. For example, each production run takes a long time to create the faded look and, in addition, a significant amount of water is used in the process.

Moreover, the handling and disposal of enzymes and wastewater require considerable attention with regard to environmental issues.

Furthermore, it should be considered that these traditional washing processes do not allow to obtain various types of workings such as, for example, localized faded effects having particular patterns.

Various machines have therefore been proposed for the application of graphics and motifs on the surfaces of the fabrics and for the execution of particular treatments, which, if desired, can be used after the traditional washing processes in order to obtain particular workings of the cloth.

In general, for the application of decorative elements or motifs, a suitable computer program or machine control software is used, capable of digitally representing the product.

In the current prior art, two digital images are typically used, a first image with the basic shapes of the product and a second with the decorative elements to be applied thereon (marking).

This technique has several drawbacks, in particular the fact that for the correct execution of the treatment it requires a precise alignment of the product, which is generally performed manually by the operator by positioning it within the treatment area of the machine. In this way, the total treatment time increases considerably, since a careful positioning process is always necessary before being able to proceed with the treatment of the product. Clearly, an increase in the total treatment time consequently translates into an overall increase in costs.

It should also be considered that often the operator, performing the positioning operation of the product manually, positions the latter in an inaccurate way and, therefore, the subsequent treatment results in a decorative element or motif applied with little precision in relation to the desired area of application. At quality control, this product could, in the worst case, be rejected, thus resulting in an increase in overall costs for the manufacturer.

Document EP3578070A1 describes an apparatus according to the state of the prior art.

It is therefore necessary and advantageous to design and manufacture a machine for the treatment of products which allows the disadvantages of the prior art listed above to be overcome.

### OBJECTS OF THE INVENTION

The technical aim of the present invention is therefore that of improving the state of the art in the sector of machines for the treatment of products, in particular textile products, such as clothing.

Another object of the present invention is to perfect a machine which allows to reduce the treatment time of the product and therefore the overall treatment costs of the same.

A further object of the present invention is to provide a machine which allows to simplify the positioning process of the product inside the treatment chamber of the machine.

Another object of the present invention is to provide a machine which allows to improve the treatment precision of products.

Yet another object of the present invention is to improve the treatment productivity and repeatability of products.

This aim and these objects are achieved by a machine for the treatment of products according to claim 1.

This aim and these objects are also achieved by the method for the treatment of products according to claim 17.

The dependent claims refer to preferred and advantageous embodiments of the invention.

### BRIEF DESCRIPTION OF THE DRAWINGS

Other features and advantages of the invention will be more evident from the description of embodiments of a machine for the treatment of products, in particular textile products, such as clothing, illustrated by way of example in the attached drawings in which:
- figure 1 is a perspective view of a machine according to an embodiment of the present invention,
- figure 2 is another perspective view of the machine according to the embodiment of the present invention shown in figure 1,

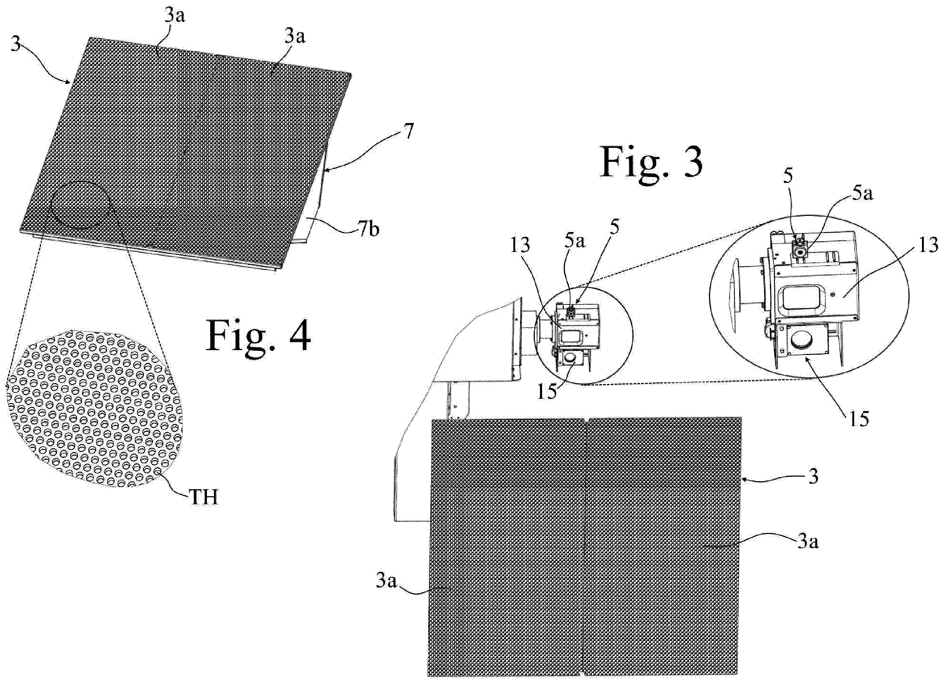

   figure 3 is a bottom view showing details of the machine according to the embodiment of the present invention shown in figure 1,
   figure 4 is a view showing components of the machine according to the embodiment of the present invention shown in figure 1,

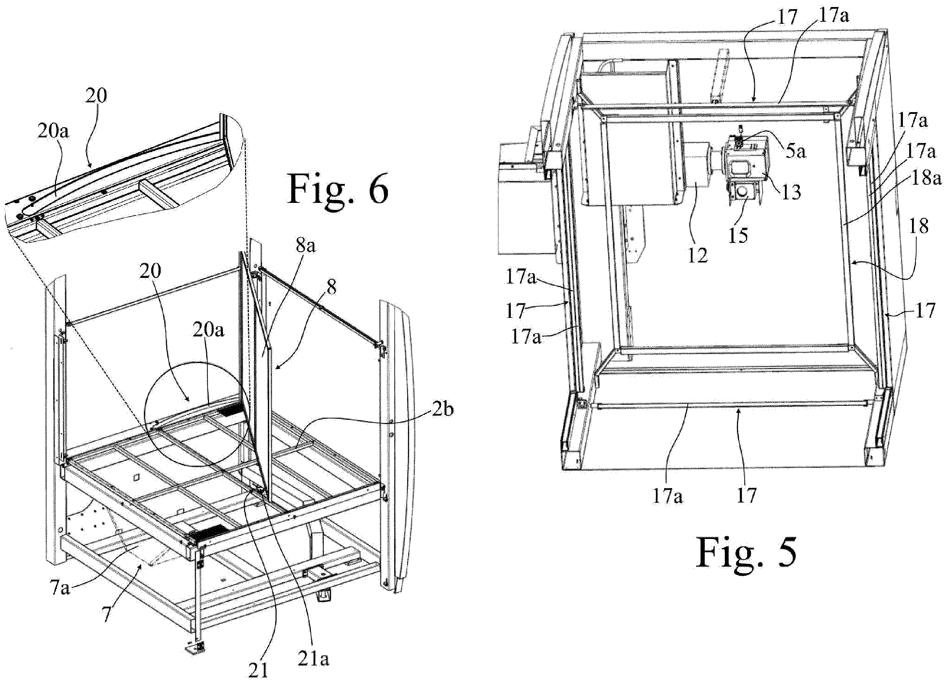

- figure 5 is another bottom view showing details of the machine according to the embodiment of the present invention shown in figure 1,
- figure 6 is a perspective view showing details of the machine according to the embodiment of the present invention shown in figure 1,

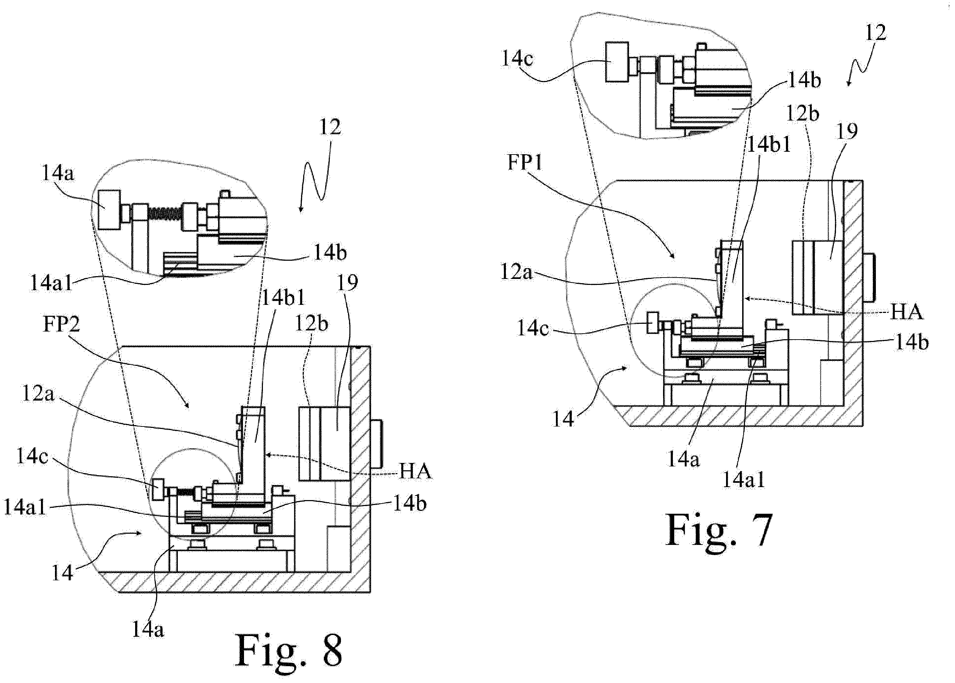

- figures 7 and 8 are side views showing details of the machine according to the embodiment of the present invention shown in figure 1,
- figure 9 is a perspective view of a machine according to another embodiment of the present invention,
- figure 10 is a front view of the machine according to the embodiment of the present invention shown in figure 9,

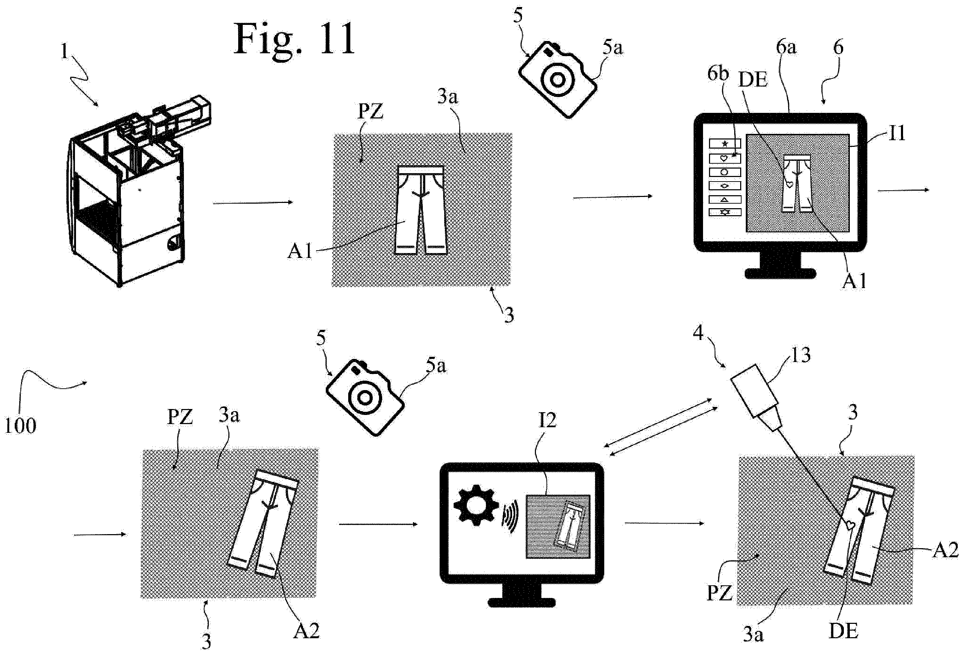

- figure 11 schematically illustrates a method for the treatment of according to an embodiment of the present invention, e

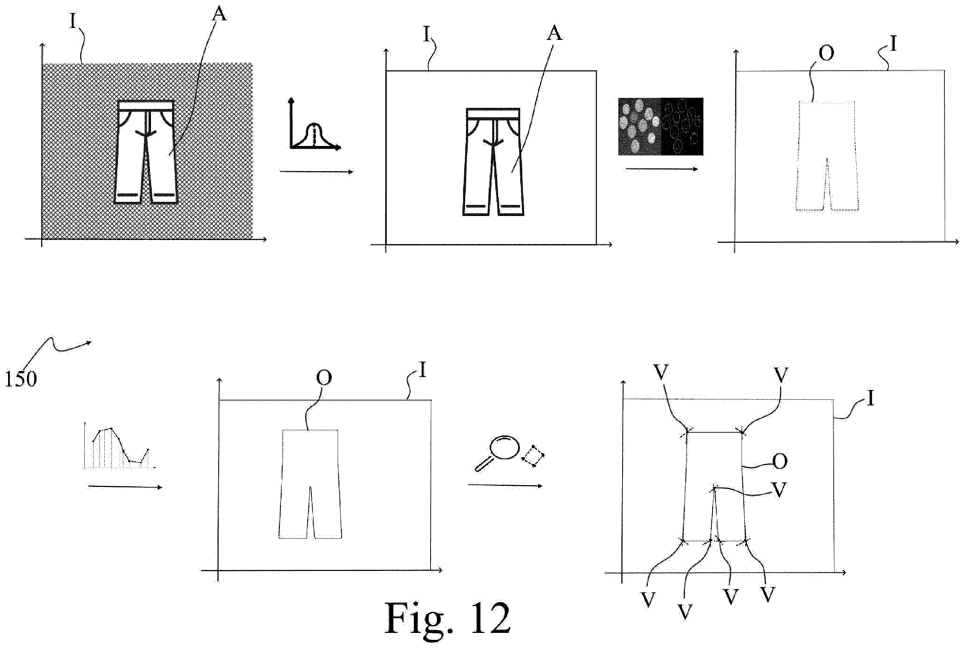

- figure 12 schematically illustrates a method for the identification according to an embodiment of the present invention.

In the accompanying drawings, identical parts or components are identified by the same reference numbers.

### EMBODIMENT OF THE INVENTION

With reference to the attached figures, the numeral 1 indicates as a whole a machine for the treatment of products according to a non-limiting embodiment of the present invention.

The machine 1 according to the present invention is particularly suitable for, but not limited to, the treatment of textile products, such as clothing, for example trousers such as jeans, shorts, sweaters, T-shirts, sweatshirts, socks, and the like.

Furthermore, the machine 1 according to the present invention is particularly suitable for, but not limited to, carrying out treatments of fading, burning, scratching, engraving or, more generally, for applying decorative elements or motifs, for example writing, graphics or combinations thereof.

If desired, the machine 1 according to the present invention can also be used for carrying out dyeing, marbling, bleaching or localized spraying treatments.

The machine 1 for the treatment of products, in particular textile products, such as clothing, according to the present invention comprises a frame 2 which defines a treatment chamber TC for at least one product and one or more access openings AO to this treatment chamber TC.

The treatment chamber TC can have any shape and any volume, for example according to the configuration of the frame 2 of the machine 1. Likewise, the access openings AO can also have any shape and any width, for example according to the volume of the treatment chamber TC.

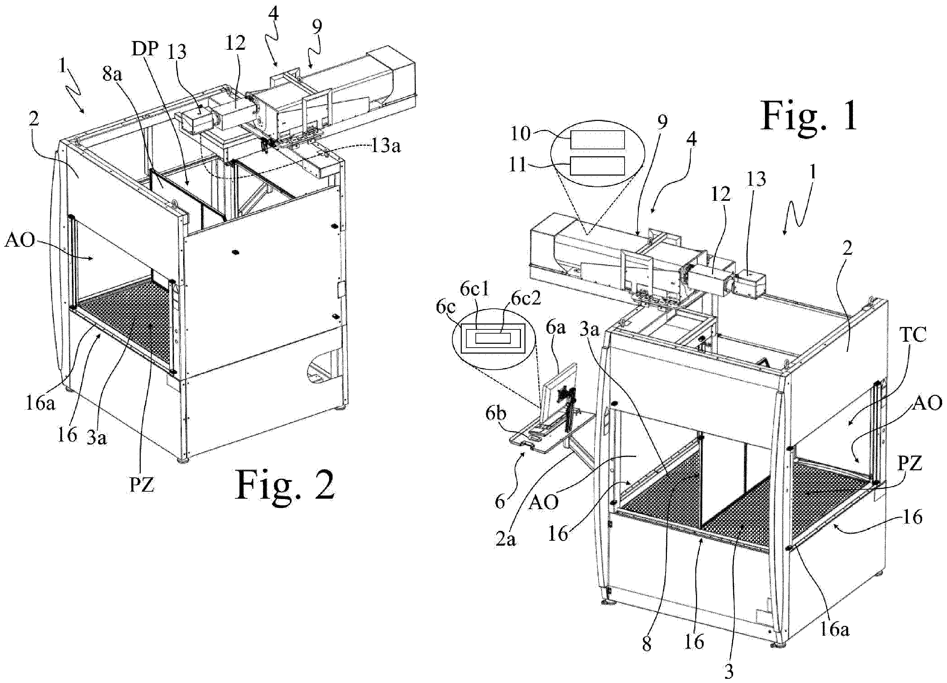

According to the non-limiting embodiment of the present invention shown in figure 1, there is a respective access opening AO at the sides and on the front of the treatment chamber TC.

Clearly, the number of access openings AO can vary according to the application requirements of the machine 1, therefore an access opening AO can be provided only on the front of the treatment chamber TC, or respective access openings AO only at the sides of the chamber of CT treatment or any other combinations.

The machine 1 according to the present invention also comprises support means 3, operatively connected to the frame 2, which delimit at least one positioning zone PZ for at least one product. In this regard, the access openings AO are designed, in use, to allow the positioning of at least one product in or on the at least one positioning zone PZ, for example manually by an operator or automatically by means of automatic positioning means, such as a conveyor belt.

Furthermore, the machine 1 according to the present invention comprises treatment means 4 configured to make an engraving or a decorative element or motif on at least one product positioned, in use, in or on the at least one positioning zone PZ.

The machine 1 according to the present invention also includes acquisition means 5 configured, in use, to acquire at least one image of the at least one positioning zone PZ having, in use, at least one product positioned in or on it, as well as processing and control means 6 in electrical and/or electronic communication with the treatment means 4 and with the acquisition means 5.

In particular, the processing and control means 6 comprise:
i) display means 6a of at least one image acquired, in use, by the acquisition means 5,
ii) selection and application means 6b a digital representation of an engraving or a decorative element or motif on a digital area of a first product or initialization product represented in at least one image acquired, in use, by the acquisition means 5 and displayed, in use, by the display means 6a, and
iii) at least one processing unit 6c comprising at least one memory 6c1 containing at least one computer program or software 6c2 configured to identify the position and/or the dimensions and/or the shape of at least one product positioned, in use, in or on the at least one positioning zone PZ, for acquiring or processing information relating or relatable to the relative position of application or realization or generation of an engraving or a decorative element or motif with respect to a first product or initialization product positioned, in use, in or on the at least one positioning zone PZ and to control the treatment means 4, as a function of said position and/or size and/or shape identification, for the realization of an engraving or of a decorative element or motif in a manner corresponding to what has been applied and selected for a first product or initialization product, so as to allow to realize or realize, in use, at least a second product with the same engraving or with the same decorative element or motif applied or realized or generated in the same relative position of application or realization or generation.

It should be noted that the wording "relative position of application or realization or generation" includes or, in any case, also takes into account the inclination and/or orientation of the engraving or decorative element or motif.

Furthermore, it should be noted that the identification of the position of at least one product takes place with respect to the positioning zone PZ, while the information relative or correlated to the relative position of application or realization or generation of an engraving or a decorative element or motif are acquired or elaborated with reference to the position of the engraving or decorative element or motif with respect to the at least one product.

Preferably, the at least one processing unit 6c is designed to control the treatment means 4, as a function of the position and/or size and/or shape identification, for the realization of an engraving or a decorative element or motif, corresponding to the digital representation of the engraving or of the decorative element or motif, in use, selected, in a real area of at least a second product, positioned, in use, in the at least one positioning zone PZ after a first product or initialization product, which corresponds to the digital area of application of the digital representation of the engraving or decorative element or motif, in use, selected on a first product or initialization product.

It should be noted that the treatment of "at least a second product" has been indicated, however, preferably, the machine 1 will process a series of products, for example a series of at least fifty, or at least one hundred, if desired, at least two hundred or even at least a thousand products, in particular textile products such as clothing.

Moreover, it should also be noted that the first product or initialization product and at least a second product or, in any case, the series of products to be treated are, preferably, all of the same type, for example all T-shirts or all trousers. Of course, if the type of product to be treated is changed, it is necessary to carry out a new initialization with the first product or initialization product selected of the desired typology.

In particular, in the case of position identification, the first product or initialization product and the at least one second product or, in any case, the series of products to be treated are preferably, in addition to being of the same type, also dimensionally equal or are dimensionally similar, i.e., there is a constant ratio between the size of the first product or initialization product and the at least one second product or, in any case, the series of products.

Furthermore, it should be noted that the wording "initialization product" is to be understood as a product, in particular a textile product, such as for example a cloth, used as a sample for the initialization of machine 1 in order for the latter to acquire the information related to the relative position of application or realization or generation of the engraving or decorative element or motif selected and applied for that initialization product, which information shall then be adapted to realize the same engraving or decorative element or motif in the same relative position of application or realization or generation on at least a second product or on a subsequent series of products.

As can be understood, unlike the treatment machines provided by the state of the art, in which a precise alignment and positioning of the product is necessary for the correct execution of the treatment, the machine 1 according to the present invention allows to reduce the alignment precision and positioning of a product, considerably speeding up this procedure since it is able to treat the product by performing an engraving or a decorative element or motif in any position it may be within the at least one positioning zone PZ.

Moreover, it should be considered that, in the state of the art, the alignment and positioning process, both if performed by an operator and if performed by an automatic positioning means, is subject to positioning inaccuracies which could potentially jeopardize the correct execution of the engraving or decorative element or motif.

The machine 1 according to the present invention allows this drawback to be eliminated since precise alignment and positioning of the product in or on the at least one positioning zone PZ is no longer necessary, but it becomes the task of the machine 1 to identify the position and/or shape and/or or the dimensions of the product to correctly execute, i.e. in the same relative position of application or realization or generation, the engraving or the decorative element or motif, resulting in a considerable simplification of the alignment and positioning process of the product.

As can be understood, this allows to increase the speed and repeatability of treatment of the products and, therefore, the overall productivity of the machine 1.

As regards the processing and control means 6, they preferably are or comprise a computerized device 6, for example a desktop computer, a laptop or a tablet, if desired supported by a support arm 2a included in the frame 2, in electrical and/or electronic communication with the treatment means 4 and with the acquisition means 5.

Preferably, the display means 6a are or comprise at least one screen, if desired a touch screen, designed to display the at least one image acquired, in use, by the acquisition means 5.

Advantageously, the selection and application means 6b are or comprise a keyboard and/or a mouse configured to allow the selection and application, for example through an operator, of a digital representation of an engraving or of a decorative element or motif on a digital area of a first product or initialization product represented in at least one image acquired, in use, by the acquisition means 5 and displayed, in use, by the display means 6a.

Preferably, the digital representation of the engraving or decorative element or motif to be selected and applied on the first product or initialization product is a digital mask, i.e., a two-dimensional image composed of several pixels which together outline or represent the engraving or decorative element or motif.

It should be considered that, in the event that the display means 6a is or includes a touch screen, the selection and application means 6b would consist of or would include a digitizer, for example of the capacitive or resistive type, configured to allow the operator to interact with the graphical interface of the screen using fingers or other objects.

With regard to the at least one computer program or software 6c2, it preferably comprises an algorithm for identifying the position and/or the shape and/or the dimensions of at least one product positioned, in use, in or on the at least one positioning zone PZ, which includes a first set of instructions designed to attenuate or reduce the noise of an image acquired by said acquisition means 5 and a second set of instructions designed to identify a plurality of reference points of at least one product represented digitally in the image.

In particular, the first set of instructions can advantageously be configured to implement the application of at least one filter, for example a low-pass smoothing filter, Gaussian if desired, to the image. In this regard, the application of this filter can take place through a convolution operation of the filter with the image.

The second set of instructions can advantageously be configured to implement:
a) an approximation, for example by means of an edge detection algorithm or by means of a segmentation algorithm, of the shape or contour of the product digitally represented in the image, obtaining a set of points that define this shape or contour,
b) an interpolation of the set of points, for example by means of a linear interpolation, to obtain a polygonal that models the shape or contour of the product,
c) an identification of the vertices of the shape of the product.

In this regard, a first approach for identifying the vertices of the shape of the product can advantageously be to provide a subset of instructions configured to implement:
c1) setting a threshold value, for example a percentage threshold value,
c2) calculating the difference between the value of the slope, i.e., of the angular coefficient, of the interpolation line or of the tangent line to the interpolation curve between pairs of successive points, and
c3) comparing the difference value of the slope calculated with the threshold value, for example the percentage threshold value, set: if the difference value of the slope, for example, exceeds the threshold value, if desired the percentage threshold value, the common point between the two successive pairs of points is considered as a vertex.

It should be considered that, according to another non-limiting embodiment of the present invention not shown in the figures, the identification of a plurality of reference points of at least one product digitally represented in an image could take place by means of operator input directly on the computerized device 6, manually selecting a plurality of reference points from the image, for example the vertices of the product.

Moreover, in case of use of an edge recognition algorithm, it is possible to advantageously provide a first subgroup of instructions configured to implement:
- the calculation of the first order derivative, i.e., the gradient, of the luminous intensity of the image, for example by convoluting the latter with a suitable mask, to find the maxima and/or minima of the gradient, which presumably identify the presence of an edge of the image, or
- the calculation of the second order derivative of the luminous intensity of the image, for example by convoluting the latter with a suitable mask, for the search of the zeros, which presumably identify the presence of an edge of the image, and
- thresholding, by setting a threshold value, the gradient or of the first order derivative of the gradient, to decide whether or not the edges are present in each point of the image.

If desired, the edge detection algorithm can also include a second subgroup of image post-processing instructions, for example designed to remove unwanted spurious edge points from the same.

As can be understood, by identifying a plurality of reference points, the at least one computer program or 6c2 software is capable of self-referencing or identifying the position of the product within the at least one positioning zone PZ and, by means of the acquisition or processing of information relating or correlated to the relative position of application or realization or generation of an engraving or a decorative element or motif with respect to the first product or initialization product, to understand what is the real area of realization of the engraving or decorative element or motif corresponding to the digital area of application of the digital representation of the engraving or decorative element or motif, in order to control the treatment means 4 accordingly.

In more detail, to understand what is the real area of realization of the engraving or decorative element or motif corresponding to the digital area of application of the digital representation of the engraving or decorative element or motif, it is possible and advantageous to use a technique of calculation of distances between points, for example a triangulation or a trilateration using, for example, the vertices or, in any case, some of the identified vertices as a reference.

By way of non-limiting example, in the event that the product is a trousers, at least seven vertices would be identified, i.e., the two pairs of vertices of the legs, the pair of vertices of the waist and the vertex at the trouser crotch. If desired, the corner points of the pockets, if present, could also be identified as vertices.

Alternatively, the trousers could be positioned in the at least one positioning zone PZ also closed, that is, with the overlapping legs and aligned with each other: in this case, by way of example, five vertices would be identified, i.e., the pair of vertices of the legs, the pair of vertices of the waist and the vertex at the crotch.

Again, by way of non-limiting example, if the product is a shirt, at least ten vertices would be identifiable, i.e., the two pairs of vertices of the free end of the sleeves, a pair of vertices at the armpits, a pair of vertices at the neck and a pair of vertices at the waist.

As regards the support means 3, according to the non-limiting embodiment of the present invention shown in figure 1, they are or comprise one or more support panels 3a which, advantageously, define a plurality of through holes TH designed to allow, in use, the suction of the fumes and/or residues deriving from the treatment of at least one product.

Preferably, the plurality of through holes TH is homogeneously distributed on the surface of the one or more support panels 3a.

From a constructive point of view, the one or more support panels 3a are preferably made of polyethylene, if desired polyethylene 300, for example with a thickness of about 5 mm.

In this regard, the use of this type of material, generally opaque, allows, thanks to its excellent properties of resistance to abrasion, corrosion and chemical products, to avoid that, following subsequent treatments, the support panels 3a are permanently marked, resulting in a considerable increase in the noise of the at least one image acquired by the acquisition means 5.

Preferably, the one or more support panels 3a have a uniform color to facilitate the position and/or shape and/or dimensions identification of the at least one product positioned, in use, in the at least one positioning zone PZ.

Always preferably, the one or more support panels 3a have a color in contrast with the at least one product positioned, in use, in the at least one positioning zone PZ, in order to facilitate identification of its position and/or shape and/or size.

From a geometric point of view, according to the non-limiting embodiments of the present invention shown in the figures, the one or more support panels 3a are arranged horizontally in the treatment chamber TC of the frame 2 so as to form a worktable.

If desired, the one or more support panels 3a can form a worktable having dimensions between 500 mm in length and 2000 mm in width, for example 1500x1500 mm or 1200x1200 mm or again 800x800 mm.

If desired, the one or more support panels 3a can be mounted on the frame 2 by means of suitable connecting means, for example screws or rivets or magnets, and can be supported by a support structure 2b included in the frame 2 which, if present, improves the stability of the one or more support panels 3a.

According to another non-limiting embodiment of the present invention not shown in the figures, the one or more support panels 3a could be arranged vertically in the treatment chamber TC of the frame 2 so as to form a working wall. In this case, retaining means configured to keep the at least one product adhering to or positioned in the at least one positioning zone PZ delimited by the one or more support panels 3a would also be provided.

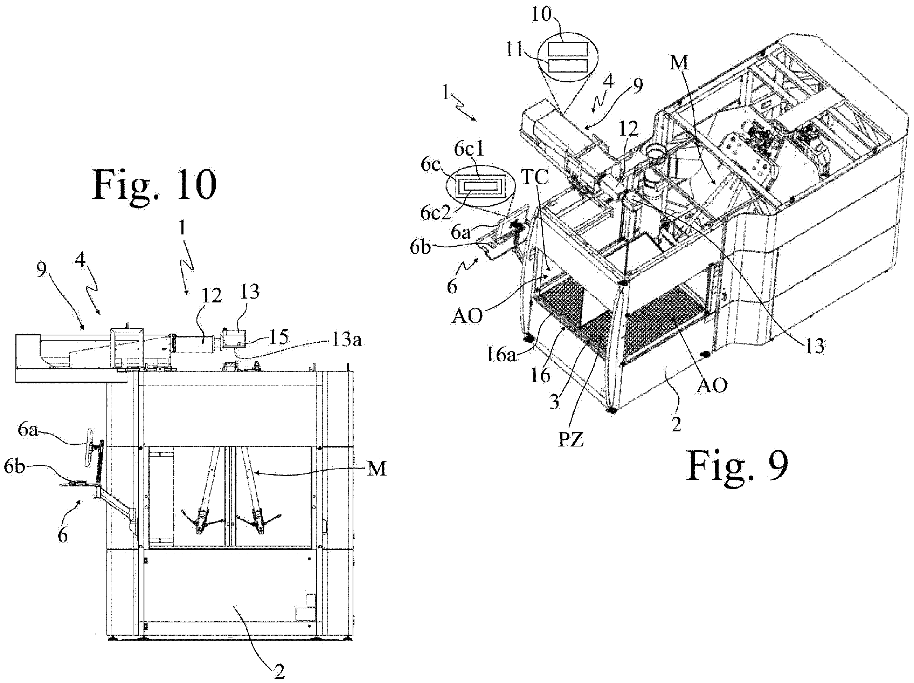

Moreover, according to the non-limiting embodiment of the present invention shown in figure 9, the support means 3 could be or comprise a mannequin M on which to fit the at least one product, preferably a cloth. In this case, the at least one computer program or software 6c2 would only perform an identification of the size of the cloth, for example considering that different sizes of a given cloth could be worn on the mannequin M.

Preferably, the machine 1 comprises suction means 7 of the fumes and/or residues deriving from the treatment of at least one product.

In particular, the suction of fumes and/or residues deriving from the treatment of at least one product is particularly useful as the fume could potentially decrease the treatment precision while the processing residues could deposit on the product during treatment and compromise the correct realization of the engraving or decorative element or motif.

According to the non-limiting embodiments of the present invention shown in the figures, the suction means 7 are positioned below the one or more support panels 3a so as to better exploit the plurality of through holes TH of the latter.

Structurally, the suction means 7 can advantageously comprise at least one suction motor operatively associated with at least one fan and, preferably, collection means 7a of the fumes and/or residues, in use, sucked in, for example a collection tank, if desired comprising or defining at least one discharge opening or duct.

Preferably, the machine 1 also comprises dividing means 8 movable between at least a rest position in which they do not divide the at least one positioning zone PZ and a dividing position DP in which they divide the at least one positioning zone PZ into at least two positioning sub-zones.

According to the non-limiting embodiments of the present invention shown in the figures, the dividing means 8 are or comprise at least one separation panel 8a which in the dividing position DP is arranged vertically to the support means 3 so as to divide the at least one positioning zone PZ in at least two positioning sub-zones.

Preferably, the machine 1 also comprises guiding means 20 configured to guide the passage of the dividing means 8 from the at least one rest position to the at least one dividing position DP and/or vice versa.

If desired, the guiding means 20 can be or comprise a sliding guide 20a, for example a curved one.

Advantageously, the machine 1 also comprises moving means 21 configured to allow the passage of the dividing means 8 between the rest position and the dividing position DP and vice versa.

According to the non-limiting embodiment of the present invention shown in figure 1, the moving means 21 are or comprise a cart 21a, connected to the dividing means 8, which can be operated manually by the operator by dragging the dividing means 8.

According to another non-limiting embodiment of the present invention not shown in the figures, the cart 21a could also be operated automatically by means of an automatic drive device.

From a constructive point of view, the at least one separation panel 8a can be made of plastic material, for example transparent, or of glass.

In particular, the realization of at least one separation panel 8a in transparent material allows an operator to observe, when the separation panel 8a is in the dividing position DP, all the positioning sub-zones, so as to be able to coordinate with any other operators.

Moreover, when the separation panel 8a is in the dividing position DP, two or more operators can advantageously simultaneously position and/or pick-up at least one product from each of the positioning sub-zones.

According to another non-limiting embodiment of the present invention (not shown in the figures), it would be possible to provide several treatment means 4 so as to simultaneously treat several products each positioned in a respective positioning sub-zone.

As regards the treatment means 4, according to the non-limiting embodiments of the present invention shown in the figures, they are or comprise emission means 4a of a LASER light beam designed to create an engraving or a decorative element or motif on at least one product positioned, in use, in the at least one positioning zone PZ.

According to other non-limiting embodiments of the present invention not shown in the figures, the treatment means 4 could also be means for emitting a jet of water, paint or, more generally, a treating product of a product.

Preferably, the emission means 4a are or comprise at least one LASER apparatus 9 which includes a LASER source 10 designed to generate a LASER light beam, transport means 11 of the LASER light beam, focusing means 12 of the LASER light beam and a processing head 13 which comprises directing means 13a of LASER light beam towards at least one product positioned, in use, in the at least one positioning zone PZ.

According to the non-limiting embodiments of the present invention shown in the figures, the at least one LASER apparatus 9 is or comprises a carbon dioxide or CO2 LASER. In this case, the LASER source 10 can advantageously comprise a tube containing carbon dioxide and other gases in variable proportions as active medium, which can be pumped by means of an electric discharge.

The use of a carbon dioxide or CO2 LASER makes it possible to achieve a high-power density and, therefore, highly precise LASER machining as well as high efficiency, i.e., a high ratio between pumping power and power emitted by the LASER apparatus 9, for example comprised between 15% and 20%. Moreover, the carbon dioxide or CO2 LASER is particularly advantageous in the event that the products to be treated are textile products, such as clothing, as the LASER light beam emitted has a main wavelength centered between 9 µm and 11 µm, for example 10.6 µm, which is absorbed very well by non-metals and organic materials.

Preferably, the machine 1 also comprises cooling means (not shown in the figures), possibly water-cooling means, configured to maintain the working temperature of the LASER source 10 within a given range so that it remains operationally stable.

Advantageously, transport means 11 of the LASER light beam are or comprise an optical chain which can include a waveguide or optical fiber or a plurality of suitably oriented mirrors.

According to the non-limiting embodiments of the present invention shown in the figures, the transport means 11 are or comprise a waveguide or optical fibre.

Preferably, the focusing means 12 are placed downstream of the transport means 11 and comprise a first lens 12a, for example a re-collimation lens, and a second lens 12b, for example a focusing lens, aligned with the second lens 12b, designed to focus the LASER light beam leaving the LASER source 10 and transported by the transport means 11.

In particular, the first lens 12a is movable with respect to the second lens 12b between a plurality of focusing positions FP1, FP2, wherein each focusing position FP1, FP2 is associated with a certain focus value of the LASER light beam which corresponds to a certain energy intensity or power value of the same.

Advantageously, the LASER apparatus 9 comprises movement means 14, operatively associated with the processing and control means 6, configured to move the first lens 12a between the plurality of focusing positions FP1, FP2 as a function of at least one energy intensity or power value of the LASER light beam selected with the processing and control means 6.

More specifically, by setting the value of energy intensity or power of the LASER light beam by means of the computerized device 6, it is possible and advantageous to command the movement means 14 so that they move the first lens 12a to a focusing position which allows this value of energy intensity or power set to be satisfied.

From a structural point of view, according to the non-limiting embodiments of the present invention shown in the figures, the movement means 14 comprise a base component 14a which delimits a sliding lane 14a1, a slide 14b operatively associated with the first lens 12a and, in use, translatable along the sliding lane 14a1 and actuation means 14c configured to actuate the translation of the slide 14b.

Preferably, the slide 14b comprises a support 14b 1 which delimits a housing area HA in which the first lens 12a is housed. In particular, the support 14b1 is configured to keep the first lens 12a horizontally aligned and facing the second lens 12b during the translational movement of the slide 14b.

The second lens 12b, on the other hand, according to the non-limiting embodiments of the present invention shown in the figures, is fixed and kept horizontally aligned and facing the first lens 12a by means of a containment sleeve 19 included in the LASER apparatus 9.

Preferably, the actuation means 14c are controlled by the processing and control means 6 according to the setting of an energy intensity or power value of a LASER light beam to be emitted, in use, by means of the LASER source 10.

In more detail, the actuation means 14c can comprise an electric motor, controlled by the processing and control means 6, and an actuator, for example a ball screw actuator, operatively associated with the electric motor at one end thereof and to the slide 14b at a second end thereof.

In other words, following the setting of an energy intensity or power value of the LASER light beam, the processing and control means 6 or, more particularly, the computerized device 6 controls the electric motor which drives the actuator to translate the slide 14b so as to obtain a focusing position between the first lens 12a and second lens 12b associated with a focus value of the LASER light beam corresponding to the set energy intensity or power value.

Basically, the possibility of moving the first lens 12a and the second lens 12b between several focusing positions allows the value of power or energy intensity of the LASER light beam to be varied while keeping both the LASER apparatus 9 and the support means 3 fixed. This makes it possible to avoid costly implementations relating to the movement of the LASER apparatus 9 and of the support means 3, which are, in general, necessary in treatment machines according to the state of the art to satisfy certain values of energy intensity or power of the LASER light beam.

As regards the processing head 13, it is advantageously positioned downstream of the focusing means 12.

Preferably, the directing means 13a comprise at least one direction mirror, for example a pair of direction mirrors, as well as adjustment means, operatively associated with the at least one direction mirror, configured to adjust the operative position of the at least one direction mirror as a function of the real area of at least one product, in use, positioned in the at least one positioning zone PZ in which the engraving or decorative element or motif is to be made.

Advantageously, the adjustment means can be or comprise a motor respectively associated with each or at least one direction mirror, for example a galvanometric rotary motor designed to transform analog or digital signals, if desired of electrical voltage, into angular movement of the direction mirror along the two-dimensional axes of the worktable defined by at least one positioning zone PZ.

Alternatively, according to another non-limiting embodiment of the present invention (not shown in the figures), the processing head 13 could be a movable processing head 13, operatively associated with respective displacement means, comprising the directing means 13a. If desired, in this case, the value of the LASER beam focus corresponding to the set energy intensity or power value could be obtained by adjusting the height of the movable processing head 13 by means of the displacement means associated with it.

Basically, the processing and control means 6 or, more particularly, the computerized device 6, in electrical and/or electronic communication, with the treatment means 4 or, more particularly, with the LASER apparatus 9 can advantageously provide to the processing head 13 or, more particularly, to the galvanometric rotary motors, an analog or digital signal, if desired of electrical voltage, which represents a raster or vectorial image containing information relative or correlated to the real area of realization of the engraving or decorative element or motif. This analog or digital signal can then be transformed into corresponding angular movements of the pair of direction mirrors which determine the engraving path or the realization path of the decorative element or motif on the real area of the product, in use, positioned in the at least one positioning zone PZ:
As can be understood, the processing head 13 is advantageously controlled by the computer program or software 6c2 which supplies it with the aforementioned raster or vectorial image.

In other words, the LASER light beam is directed by means of the direction mirror-adjustment means pair of the processing head 13 in the correct area for the realization of the engraving or decorative element or motif.

From a geometric point of view, the LASER apparatus 9 is advantageously mounted on the frame 2 above the support means 3, preferably with the processing head 13 positioned centrally with respect to the at least one positioning zone PZ. This allows the processing head 13 to have total coverage of the at least one positioning zone PZ.

If desired, the at least one LASER apparatus 9 can also comprise a preview head 15 configured, in use, to project onto the at least one positioning zone PZ a LASER light beam corresponding to the contour of a digital representation of an engraving or a decorative element or motif selected and applied with the selection and application means 6b on a digital area of at least one product represented in at least one image acquired by the acquisition means 5 and displayed by the display means 6a.

In other words, the preview head 15 has the function of providing the operator with a preview of the contour of the engraving or decorative element or motif, selected by means of the selection and application means 6b, which he will potentially realize on a product.

As regards the acquisition means 5, they are or preferably comprise at least one camera or video camera 5a, for example digital.

According to the non-limiting embodiments of the present invention shown in the figures, the at least one camera or video camera 5a is a digital camera or video camera 5a comprising an active pixel sensor, if desired configured to acquire the at least one image of the at least one positioning zone PZ by means of a scan.

Preferably, the at least one camera or video camera 5a is positioned alongside or in any case close to the processing head 13 so as to have total coverage of the at least one positioning zone PZ.

If desired, the at least one camera or video camera 5a can be positioned at a distance from the at least one positioning zone PZ of between 1000 mm and 2000 mm, for example 1840 mm or 1680 mm or again 1015 mm.

Moreover, the acquisition of the at least one image of the at least one positioning zone PZ can be acquired by at least one camera or video camera 5a according to a plurality of resolutions, for example as a function of a resolution parameter set by the processing and control means 6 or, more particularly, by means of the computerized device 6.

As can be understood, the higher the resolution of the at least one acquired image, the higher the precision of realization of an engraving or decorative element or motif by means of the treatment means 4. However, the higher the precision of realization will be of an engraving or decorative element or motif, the longer the treatment time of a product will be.

It is therefore possible for the operator to manually manage the desired resolution parameter according to operational needs.

According to other non-limiting embodiments of the present invention not shown in the figures, the acquisition means 5 could comprise several cameras or video cameras 5a, for example, a camera or video camera 5a positioned at the top of the treatment chamber TC or, in any case, above the at least one positioning zone PZ and a camera or video camera 5a positioned at one side of the treatment chamber TC or, in any case, laterally to the at least one positioning zone PZ, so as to be able to carry out a three-dimensional acquisition and/or reconstruction of at least one product positioned in the at least one positioning zone PZ.

Preferably, the treatment means 4 comprise at least a first operating mode in which they treat at least one product positioned, in use, in the at least one positioning zone PZ and at least a second operating mode in which they are deactivated or awaiting instructions.

In this regard, the machine 1 advantageously comprises protection means 16, in electrical and/or electronic communication with the processing and control means 6, configured to deactivate or interrupt the treatment means 4 when they are in the first operating mode following the entry of any physical entity into the at least one positioning zone PZ.

According to the non-limiting embodiments of the present invention shown in the figures, the protection means 16 are or comprise a plurality of photoelectric sensors 16a. In particular, the photoelectric sensors 16a deactivate or interrupt the treatment means 4 when they are in the first operating mode following the entry of any physical entity into the at least one positioning zone PZ.

From a geometric point of view, the plurality of photoelectric sensors 16a is preferably arranged around the perimeter of the at least one positioning zone PZ, for example at one or more access openings AO.

Basically, the protection means 16 or, more particularly, the plurality of photoelectric sensors 16a is able to detect the entry of a physical entity inside the at least one positioning zone PZ following the interruption of the light beam emitted by an emitter and received by a respective receiver comprised in each photoelectric sensor 16a of the plurality. Subsequently, this/the photoelectric sensors 16a are able to send a signal relating to the entry of an entity into the at least one positioning zone PZ to the processing and control means 6 which can then disable or interrupt the treatment means 4 if these are in the first operating mode.

As can be understood, the protection means 16 allow a considerable safety of the operator during the treatment of the product A.

Advantageously, the machine 1 comprises main lighting means 17 of the treatment chamber TC and auxiliary lighting means 18 configured to further improve the brightness and diffusion of light in the treatment chamber TC so as to optimize the acquisition of at least one image by the acquisition means 5.

If desired, the main lighting means 17 can consist of or can comprise one or more strips of light emitting diodes or LEDs 17a, for example connected to the frame 2, preferably above the at least one positioning zone PZ.

Advantageously, the auxiliary lighting means 18 comprise a plurality of light emitting diodes or LEDs arranged and connected internally on at least one side of the treatment chamber TC, for example to the frame 2, preferably above the at least one positioning zone PZ.

According to the non-limiting embodiments of the present invention shown in the figures, the auxiliary lighting means 18 consist of or comprise a frame 18a of light emitting diodes or LEDs connected to the frame 2.

A non-limiting example of operation of the machine 1 is described below according to the non-limiting embodiment of the same shown in figure 1.

Assume, by way of example, that the products A to be treated are trousers and that the treatment to be carried out is the application of a faded effect by burning the trousers surface, i.e., a decorative motif.

Initially, the operator activates machine 1.

The main lighting means 17 and the auxiliary lighting means 18 are activated to improve the brightness and light diffusion in the treatment chamber TC as well as the protection means 16.

If desired, the operator sets the resolution with which the camera 5a will acquire the images of the positioning zone PZ, as well as the energy intensity or power of the LASER apparatus 9 for the treatment of the trousers, or he maintains these parameters as per default setting.

In case of setting the energy intensity or power of the LASER apparatus 9, the movement means 14, operatively associated with the computerized device 6, move the first lens 12a to a focusing position which corresponds to the energy intensity or power value of the LASER apparatus 9 set up through the computerized device 6.

The operator places a first trousers in the positioning zone PZ defined by the support panels 3a connected to the frame 2.

It is therefore possible to proceed with the initialization of the treatment by acquiring, by means of the camera 5a, for example through a scan, a first image I1 of the positioning zone PZ. This first image I1 is sent by the camera 5a to the computerized device 6 which can display it on its screen.

The operator selects, by means of the selection and application means 6b or, more particularly, by means of the mouse, the digital representation of the decorative motif and applies it on a desired digital area of the first trousers represented in the first image I.

The computer program or software 6c2 present in the memory 6c1 of the processing unit 6c of the computerized device 6 then proceeds to identify the position and/or dimensions and/or shape of the first trousers by means of a first set of instructions designed to attenuate or reduce the noise of the first image I1 acquired by the camera 5a and a second set of instructions designed to identify a plurality of reference points of the first trousers digitally represented in the first image 11.

In particular, the identification of the plurality of reference points can take place by approximating the shape or contour of the first trousers digitally represented in the first image I1, obtaining a set of points which define this shape or contour. It is then possible to interpolate this set of points to obtain a polygon which models the shape or contour of the first trousers and identify the vertices of the shape or contour of the first trousers.

In more detail, the identification of the vertices can take place, according to a first approach, by setting a threshold value, for example a percentage threshold value, calculating the value of the difference between the value of slope, i.e., of the angular coefficient, of the interpolation line or of the tangent line to the interpolation curve between pairs of successive points, and comparing the difference value between the calculated value of slope with the threshold value, if desired the percentage threshold value, set: if the value of the difference between the value of slope, for example, exceeds the threshold value, if desired the percentage threshold value, the common point between the two successive pairs of points is considered as vertex.

Subsequently, the computer program or software 6c2 acquires or processes information relating or correlated to the relative position of application or realization or generation of the engraving or of the decorative element or motif with respect to the first trousers positioned on the positioning zone PZ.

At this point, the first trousers are treated or removed from the positioning zone PZ and, subsequently, a second trousers are positioned in any position in the at least one positioning zone PZ.

A second image I2 of the positioning zone PZ with the second trousers is then acquired and, similarly to the first trousers, identification of the position and/or dimensions and/or shape of the second trousers is performed.

It is therefore possible to start the treatment of the second trousers using the LASER apparatus 9 which is controlled as a function of the identification of the position and/or dimensions and/or shape of the second trousers to make a decorative motif, corresponding to the digital representation of the decorative motif selected, in a real area of the second trousers which corresponds to the digital area in which the digital representation of the selected decorative motif has been applied.

In particular, the computer program or software 6c2 uses both the information relative or correlated to the relative position of application or realization or generation of the engraving or of the decorative element or motif, as well as the identification of the position and/or of the dimensions and/or of the shape of the second trousers, to understand what is the real area of realization of the engraving or decorative element or motif corresponding to the digital application area of the digital representation of the engraving or decorative element or motif.

During the treatment, the suction means 7 suck up the fumes and/or residues deriving from the treatment of the second trousers so as to allow the LASER apparatus 9 to operate with maximum precision.

It is then possible to proceed with the treatment of all the desired trousers and, in case of need to change the type of trousers and/or engraving or decorative element or motif, it is possible to perform a new initialization.

As emerges from the brief non-limiting example of operation presented above, the object of the present invention is also a method 100 for the treatment of product, in particular textile product, such as clothing.

The method 100 according to the present invention initially comprises the step of providing a machine 1 according to the present invention or according to non-limiting embodiments of the present invention.

The step of positioning in at least one positioning zone PZ at least one first product A1 in a first position is then provided.

Subsequently, the step of acquiring, by means of acquisition means 5, at least one first image I1 of the at least one positioning zone PZ having the first product A1 positioned thereon is provided.

Then the step of displaying the at least one first image I1 acquired on display means 6a is envisaged.

Subsequently, the step of selecting and applying, by means of selection and application means 6b, a digital representation of an engraving or of a decorative element or motif DE on a digital area of the first product or initialization product A1 represented in the at least one first image I1 acquired by the acquisition means 5 and displayed by the display means 6a is provided.

Subsequently, the step of identifying, by means of at least one computer program or software 6c2 included in at least one memory 6c1 of a processing unit 6c included in processing and control means 6, the position and/or the dimensions and/or the shape of the first product or initialization product A1 and the step of acquiring or processing information relating to or correlated to the relative position of application or realization or generation of an engraving or a decorative element or motif DE with respect to the first product or initialization product A1 positioned in at least one positioning zone PZ is envisaged.

Next, there is the step of positioning in the at least one positioning zone PZ at least one second product A2, substantially the same as the first product or initialization product A1, in a second position equal to or different from the first position. In particular, the second position can be the same as the first position if the support means 3 are or include a mannequin M.

The step of acquiring, by means of the acquisition means 5, at least one second image I2 of the at least one positioning zone PZ having the second product A2 positioned thereon is therefore envisaged.

Then, there is the step of identifying, by means of at least one computer program or software 6c2, the position and/or dimensions and/or shape of the second product A2.

Subsequently, the step of treating the second product A2 by means of treatment means 4 is provided.

In particular, the step of treating comprises the steps of commanding the treating means 4 as a function of the position and/or size and/or shape identification of the first product or initialization product A1 and of the second product A2, and the step of making an engraving or a decorative element or motif DE on the at least one second product A2 in the relative position of application or realization or generation corresponding to what was applied and selected for the first product or initialization product A1.

Advantageously, the engraving or decorative element DE produced corresponds to the digital representation of the engraving or decorative element or motif DE selected, in a real area of the second product A2 which corresponds to the digital application area of the digital representation of the engraving or of the selected decorative element or motif DE.

Preferably, the above-mentioned step of identifying respectively comprise the steps of attenuating or reducing the noise of at least one first/second image I1, I2 of the first/second product A1, A2 acquired by the acquisition means 5, and of identifying a plurality of reference points of the first/second product A1, A2 digitally represented in the at least one first/second image I1, I2.

Advantageously, the step of identifying comprises the step of approximating the shape or contour of the first/second product A1, A2 digitally represented in the at least one first/second image 12, obtaining a set of points which define this shape or contour, the step of interpolating the set of points to obtain a polygon which models the shape or contour of the first/second product A1, A2 and the step of identifying the vertices of the shape of the first/second product A1, A2.

If desired, the step of identifying can include the step of setting a threshold value, for example a percentage threshold value, the step of calculating the difference between the value of the slope, i.e. of the angular coefficient, of the interpolation line or of the tangent line to the interpolation curve between pairs of successive points and the step of comparing the difference value of the slope calculated with the threshold value, if desired the percentage threshold value, set to determine whether the point in common between the two pairs of points following is considered as a vertex.

Moreover, the step of making preferably comprises the steps of generating, by means of a LASER source 10 of a LASER apparatus 9, a LASER light beam, the step of transporting, by means of transport means 11 of the LASER apparatus 9, the light beam LASER towards a processing head 13 of the LASER apparatus 9, the step of focusing, by means of focusing means 12 of the LASER apparatus 9, the LASER light beam, and the step of directing, by means of directing means 13a, the processing head 13, the LASER light beam towards the second product A2 positioned in the at least one positioning zone PZ.

Advantageously, the step of making can also include the step of setting, by means of the processing and control means 6, an energy intensity or power value of the LASER light beam, and the step of controlling, by means of the processing and control means 6, the focusing means 12 as a function of the set energy intensity or power value of the LASER light beam.

As can be seen from the present description, the machine 1 and the treatment method 100 allow effective identification of the position and/or shape and/or dimensions of a product.

For this reason, object of the present invention is also a method 150 for the identification of position and/or shape and/or dimensions of products, in particular textile products, such as clothing, by means of processing and control means 6 or, more in the detail, by means of a computerized device 6, of a machine 1 according to the present invention or according to non-limiting embodiments of the present invention.

The identification method 150 initially comprises the step of attenuating or reducing the noise of at least one image I of a product acquired by acquisition means 5 of the machine 1, and the step of identifying a plurality of reference points V of the product A digitally represented in the at least one image I.

Preferably, the step of identifying comprises the steps of approximating the shape or contour O of the product A digitally represented in the at least one image I, obtaining a set of points which define this shape or contour O, interpolating this set of points to obtain a polygon that models the shape or contour of the product A, and identify the vertices V of the shape O of the product A.

Advantageously, the step of identifying can initially comprise the step of setting a threshold value, for example a percentage threshold value.

The step of calculating the difference between the value of the slope, i.e., of the angular coefficient, of the interpolation line or of the tangent line to the interpolation curve between pairs of successive points can then be provided.

Finally, the step of comparing the calculated slope difference value with the threshold value, if desired the percentage threshold value, set to determine whether the common point between the two successive pairs of points can be considered as vertex V can be envisaged.

It should be noted that, as regards the step of approximating, it can be carried out, for example, by means of an edge recognition algorithm or by means of a segmentation algorithm.

Object of the present invention is also a computer program or software product 6c2 for the identification of the position and/or shape and/or dimensions of products, in particular textile products, such as clothing, loaded into a memory 6c1 of a processing unit 6c of processing and control means 6 or, more specifically, of a computerized device 6, of a machine 1 according to the present invention or according to non-limiting embodiments of the present invention.

More specifically, this computer program or software 6c2 comprises a plurality of instructions, for example written in any suitable programming language, if desired Java, C, C++, C#, PHP, Visual Basic, Javascript, Python, Ruby or other suitable language, to ensure that, when performed by the processing unit 6c, the processing and control means 6 or, more particularly, the computerized device 6, performs the method 150 for the identification according to the present invention or according to non-limiting embodiments of the present invention.

As can be understood, the machine 1 according to the present invention as well as the method according to the present invention allow the drawbacks of the state of the art described above to be solved.

In particular, the machine 1 allows to reduce the treatment time of the product and therefore the overall treatment costs of the same through the simplification of the process of positioning the product inside the treatment chamber of the machine.

This also allows to improve the productivity and the repeatability of treatment of products as well as the treatment precision of the same.

It has thus been seen how the invention fully achieves the proposed aims.

Modifications and variations of the invention are possible within the scope of protection defined by the claims.

## Claims

1. Machine (1) for the treatment of clothing, comprising:
- a frame (2) which defines a treatment chamber (TC) for at least one cloth and one or more access openings (AO) to said treatment chamber (TC),
- support means (3), operatively connected to said frame (2), which delimit at least one positioning zone (PZ) for at least one cloth,
- treatment means (4) configured to make an engraving or a decorative element or motif on at least one cloth positioned, in use, in or on said at least one positioning zone (PZ),
**characterized in that** it comprises:
- acquisition means (5) configured, in use, to acquire at least one image of said at least one positioning zone (PZ) having, in use, at least one cloth positioned in or on it, and
- processing and control means (6), in electrical and/or electronic communication with said treatment means (4) and with said acquisition means (5), which comprise:
i) display means (6a) of at least one image acquired, in use, by said acquisition means (5),
ii) selection and application means (6b) of a digital representation of an engraving or of a decorative element or motif on a digital area of at least one first cloth or initialization cloth represented in at least one image acquired, in use, by said acquisition means (5) and displayed, in use, by said display means (6a), and
iii) at least one processing unit (6c) comprising at least one memory (6c1) containing at least one computer program or software (6c2) configured to identify the position and/or size and/or shape of at least one cloth positioned, in use, in or on said at least one positioning zone (PZ), to acquire or process information relating or correlatable to the relative position of application or realization or generation of an engraving or of a decorative element or motif with respect to a first cloth or initialization cloth positioned, in use, in or on said at least one positioning zone (PZ) and to control said treatment means (4), as a function of said position and/or size and/or shape identification, for the realization of an engraving or of a decorative element or motif in a manner corresponding to what has been applied and selected for a first cloth or initialization cloth, so as to allow to realize at least a second cloth with the same engraving or with the same decorative element or motif applied or realized or generated in the same relative position of application or realization or generation.

2. Machine according to claim 1, wherein said at least one processing unit (6c) is designed to control said treatment means (4), according to said position and/or size and/or shape identification, for the realization of an engraving or decorative element or motif, corresponding to the digital representation of the engraving or decorative element or motif, in use, selected, in a real area of at least one second cloth, positioned, in use, in said at least one positioning zone (PZ) after a first cloth or initialization cloth, which corresponds to the digital area of application of the digital representation of the engraving or of the element or decorative motif, in use, selected on a first cloth or initialization cloth.

3. Machine (1) according to claim 1 or 2, wherein said at least one computer program or software (6c2) comprises an algorithm for identifying the position and/or shape and/or size of at least one cloth positioned, in use, in said at least one positioning zone (PZ), which includes a first set of instructions for attenuating the noise of an image acquired by said acquisition means (5) and a second set of instructions for identifying a plurality of reference points of at least one cloth represented digitally in the at least one image.

4. Machine (1) according to any one of the preceding claims, wherein said support means (3) are or comprise one or more support panels (3a) which define a plurality of through holes (TH) designed to allow, in use, the suction of fumes and/or residues deriving from the treatment of at least one cloth.

5. Machine (1) according to any one of the preceding claims, comprising suction means (7) of the fumes and/or residues deriving from the treatment of at least one cloth.

6. Machine (1) according to any one of the preceding claims, comprising dividing means (8) movable between at least a rest position in which they do not divide said at least one positioning zone (PZ) and a dividing position (DP) in which they divide said at least one positioning zone (PZ) in at least two positioning sub-zones.

7. Machine (1) according to any one of the preceding claims, wherein said treatment means (4) are or comprise emission means (4a) of a LASER light beam designed to make an engraving or a decorative element or motif on at least one cloth positioned, in use, in said at least one positioning zone (PZ).

8. Machine (1) according to the preceding claim, wherein said emission means (4a) are or comprise at least one LASER apparatus (9) which includes a LASER source (10) designed to generate a LASER light beam, transport means (11) of the LASER light beam, focusing means (12) of the LASER light beam and a processing head (13) which includes directing means (13a) of the LASER light beam towards at least one cloth positioned, in use, in said at least one positioning zone (PZ).

9. Machine (1) according to claim 7 or 8, wherein said focusing means (12) comprise a first lens (12a) and a second lens (12b), aligned with said first lens (12a), designed to focus the LASER light beam exiting from said LASER source (10) transported by said transport means (11), said first lens (12a) being movable with respect to said second lens (12b) between a plurality of focusing positions (FP1, FP2), wherein each focusing position (FP1, FP2) is associated with a determined value of the focus of the LASER light beam which corresponds to a determined energy intensity or power value of the same.

10. Machine (1) according to the preceding claim, wherein said at least one LASER apparatus (9) comprises movement means (14), operatively associated with said processing and control means (6), configured to move said first lens (12a) between said plurality of focusing positions (FP1, FP2) as a function of at least one energy intensity or power value of the LASER light beam selected with said processing and control means (6).

11. Machine (1) according to the preceding claim, wherein said movement means (14) comprise a base component (14a) which delimits a sliding lane (14a1), a slide (14b) operatively associated with said first lens (12a) and, in use, translatable along said sliding lane (14a1) and actuation means (14c) configured to actuate the translation of said slide (14b).

12. Machine (1) according to the preceding claim, wherein said actuation means (14c) are controlled by said processing and control means (6) according to the setting of an energy intensity or power value of a LASER light beam to be emitted, in use, by means of said LASER source (10).

13. Machine (1) according to any one of claims 8 to 12, wherein said at least one LASER apparatus (9) comprises a preview head (15) configured, in use, to project on said at least one positioning zone (PZ) a LASER light beam corresponding to the outline of a digital representation of an engraving or of a decorative element or motif selected and applied with said selection and application means (6b) on a digital area of at least one cloth represented in at least one image acquired by said acquisition means (5) and displayed by said display means (6a).

14. Machine (1) according to any one of the preceding claims, wherein said acquisition means (5) are or comprise at least one camera or video camera (5a).

15. Machine (1) according to any one of the preceding claims, wherein said treatment means (4) comprise at least one first operating mode in which they treat at least one cloth positioned, in use, in said at least one positioning zone (PZ) and at least one second operating mode in which they are deactivated or awaiting instructions, said machine (1) comprising protection means (16), in electrical and/or electronic communication with said processing and control means (6), configured to deactivate or interrupt said treatment means (4) when they are in said first operating mode following the entry of any physical entity into said at least one positioning zone (PZ).

16. Machine (1) according to any one of the preceding claims, comprising main lighting means (17) of said treatment chamber (TC) and auxiliary lighting means (18) configured to further improve the brightness and light diffusion in said treatment chamber (TC) so as to optimize the acquisition of at least one image by means of said acquisition means (5).

17. Method (100) for the treatment of clothing, comprising the steps of:
providing a machine (1) according to any one of the preceding claims,
positioning in at least one positioning zone (PZ) at least one first cloth or initialization cloth (A1) in a first position,
acquiring, by means of acquisition means (5), at least a first image (I1) of said at least one positioning zone (PZ) having said first cloth or initialization cloth (A1) positioned in or on it,
displaying said at least one first image (I1) acquired on display means (6a),
selecting and applying, by means of selection and application means (6b), a digital representation of an engraving or of a decorative element or motif (DE) on a digital area of said first cloth or initialization cloth (A1) represented in said at least one first image (I1) acquired by said acquisition means (5) and displayed by said display means (6a),
identifying, by means of at least one computer program or software (6c2) included in at least one memory (6c1) of a processing unit (6c) comprised in processing and control means (6), the position and/or the dimensions and/or the shape of said first cloth or initialization cloth (A1),
acquiring or processing information relating or correlatable to the relative position of application or realization or generation of an engraving or of a decorative element or motif (DE) with respect to said first cloth or initialization cloth (A1) positioned in said at least one positioning zone (PZ),
positioning in said at least one positioning zone (PZ) at least a second cloth (A2), substantially equal to said first cloth or initialization cloth (A1), in a second position equal to or different from said first position,
acquiring, by means of said acquisition means (5), at least a second image (12) of said at least one positioning zone (PZ) having said second cloth (A2) positioned in or on it,
identifying, by means of said at least one computer program or software (6c2), the position and/or the dimensions and/or the shape of said second cloth (A2),
treating, by means of treatment means (4), said second cloth (A2), wherein said step of treating comprises the steps of:
commanding said treatment means (4) as a function of said position and/or size and/or shape identification of said first cloth or initialization cloth (A1) and of said second cloth (A2), and
making an engraving or a decorative element or motif (DE) on said at least one second cloth (A2) in the relative position of application or realization or generation corresponding to what is applied and selected for said first cloth or initialization cloth (A1).

18. Method (150) for the identification of the position and/or shape and/or dimensions of clothing, by means of processing and control means (6) of a machine (1) according to any one of the claims 1 to 16, said method comprising the steps of:
attenuating the noise of at least one image (I) of a cloth (A) acquired by acquisition means (5) of said machine (1),
identifying a plurality of reference points (V) of said cloth (A) represented digitally in said at least one image (I).

19. Computer program or software product (6c2) for the identification of the position and/or shape and/or size of clothing, loaded in a memory (6c1) of a processing unit (6c) of processing and control means (6) of a machine (1) according to any one of claims 1 to 16, said computer program or software (6c2) comprising a plurality of instructions to cause, when executed by said processing unit (6c), said processing and control means (6) carry out the method (150) according to claim 18.
